Europäisches Patentamt

European Patent Office

Office européen des brevets

(11) Publication number: **0 119 665**
A2

# EUROPEAN PATENT APPLICATION

(21) Application number: **84200387.3**

(22) Date of filing: **16.03.84**

(51) Int. Cl.³: **F 16 K 19/00, E 21 B 43/00, C 08 J 3/00**

(30) Priority: **17.03.83 US 476441**

(43) Date of publication of application: **26.09.84** Bulletin 84/39

(84) Designated Contracting States: **DE FR GB**

(71) Applicant: **THE DOW CHEMICAL COMPANY, Dow Center 2030 Abbott Road Post Office Box 1967, Midland Michigan 48640 (US)**

(72) Inventor: **Crow, Warren L., 327 East 3rd, City of Mt. Carmel Illinois 62863 (US)**

(74) Representative: **Urbanus, Henricus Maria, Ir. et al, c/o Vereenigde Octrooibureaux Nieuwe Parklaan 107, NL-2587 BP 's-Gravenhage (NL)**

(54) **Apparatus and method for inverting a polymer emulsion.**

(57) An apparatus for inverting a water-in-oil emulsion, containing a water-soluble or dispersible polymer in the water phase, into an aqueous medium and method for using this apparatus to invert such an emulsion. The apparatus comprises a valve body having a first entry conduit and an exit conduit which form a portion of the body, a control means, located within the body between the first entry and exit conduit, for controlling fluid flow between the two conduits, and a second entry conduit which is integrally joined to the body and in fluid communication with the first entry conduit. The apparatus is particularly suited for inverting water-in-oil emulsions of acarylamide polymers into oilfield brines or hard water, the resulting aqueous stream being useful for the treatment of subterranean formations.

0119665

## APPARATUS AND METHOD FOR INVERTING
## A POLYMER EMULSION

An apparatus and a method for inverting a water-in-oil ("w/o") emulsion of a water-soluble or dispersible polymer, such as an emulsion containing an acrylamide polymer in its aqueous phase.

Previously, such w/o emulsions have been inverted and dispersed or dissolved in aqueous media, especially hard water or brines, only with great difficulty. Ordinarily, complicated equipment involving multiple inline static mixers, baffles, eductors and the like, have been employed in attempts to invert such w/o emulsions. To obtain a uniformly dispersed aqueous stream has often required a significant investment of capital to employ such equipment, and even then satisfactory results were frequently difficult to obtain.

A previous version of the apparatus described herein, in which the entry conduits were not integrally joined to the body of the apparatus, suffered problems of leakage from the point of juncture of the conduits with the body, due to corrosion from the strong brines employed.

Fig. 1 is a partial cutaway side view of an embodiment of the apparatus of the invention with the control means in a closed position.

Fig. 2 is a cutaway side view of the same apparatus of Figure 1 wherein the control means is in an open position.

Fig. 3 is a schematic view of an embodiment of the invention where a w/o emulsion is added on the fly to an aqueous medium being introduced into a wellbore.

The present invention resides in an apparatus for inverting a water-in-oil emulsion containing a water-soluble or water-dispersible polymer into an aqueous medium, which apparatus comprises:

(A) a valve body having a first inlet conduit and an outlet conduit which form a portion of the valve body;

(B) a second inlet conduit which is integrally joined to the valve body and which is in fluid communication with the first inlet conduit; and

(C) a control means, located within the valve body between the first inlet and outlet conduits, for controlling fluid flow between the conduits;

wherein the control means is adjustably positioned in the valve body to control fluid communication between the first inlet and outlet conduits.

0119665

The present invention also resides in a method for inverting a water-in-oil emulsion into an aqueous medium, wherein the emulsion's water phase contains a water-soluble or water-dispersible polymer, which process comprises employing the apparatus of Claim 1 and

    (A)  introducing the aqueous medium or the emulsion into the first inlet conduit;

    (B)  simultaneously introducing the other of the aqueous medium or the emulsion into the second inlet conduit;

    (C)  conducting the fluids of steps (A) and (B) to the outlet conduit and there collecting a resulting aqueous, polymer and oil containing stream; and

    (D)  conducting the resulting stream from the valve body.

The apparatus of the invention is particularly useful for inverting a w/o emulsion, containing a watersoluble or waterdispersible polymer, into an aqueous-medium, particularly an aqueous medium comprising significant quantities of minerals or salts (e.g., hard waters or brines) and a method using the apparatus for that purpose.  It is particularly useful for inverting a w/o emulsion, the water phase of which comprises a polymer of acrylamide, into oilfield brines obtained from subterranean formations, preferably by additionally employing an inverting aid fluid, such as an aqueous surfactant solution.  With this apparatus, the problems encountered previously in attempts to disperse and/or dissolve the polymers of such w/o emulsions, may be avoided. Instead of a thick, viscous layer of polymer in the bottom of a batch mixing tank (which is often obtained when a paddle mixer or other liquid blending means is employed to dissolve and/or disperse such emulsions) one easily and quickly obtains an evenly blended polymer dispersion or solution without further trouble or processing, when using the apparatus of the invention.

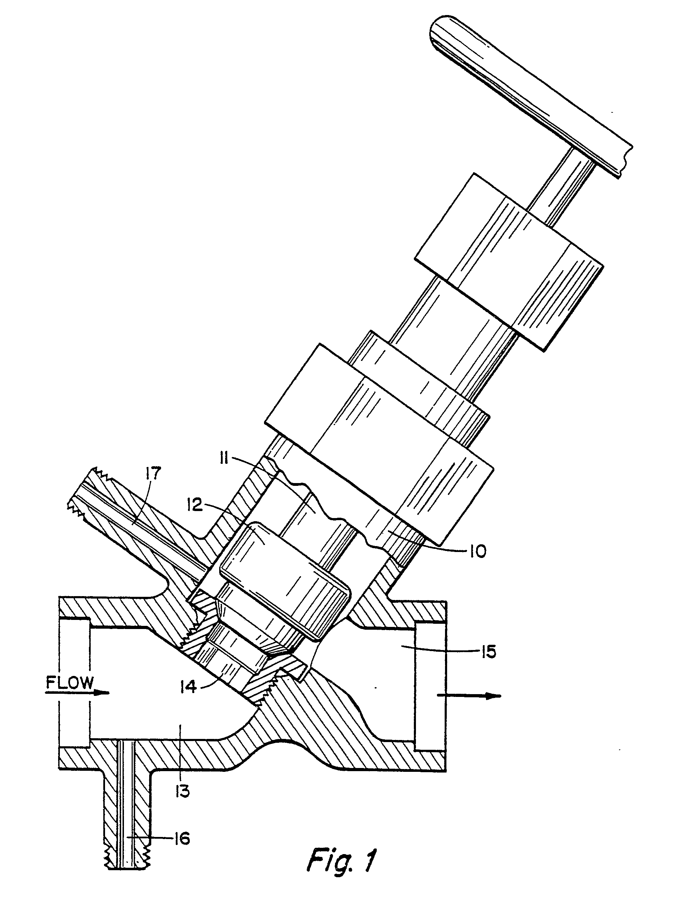

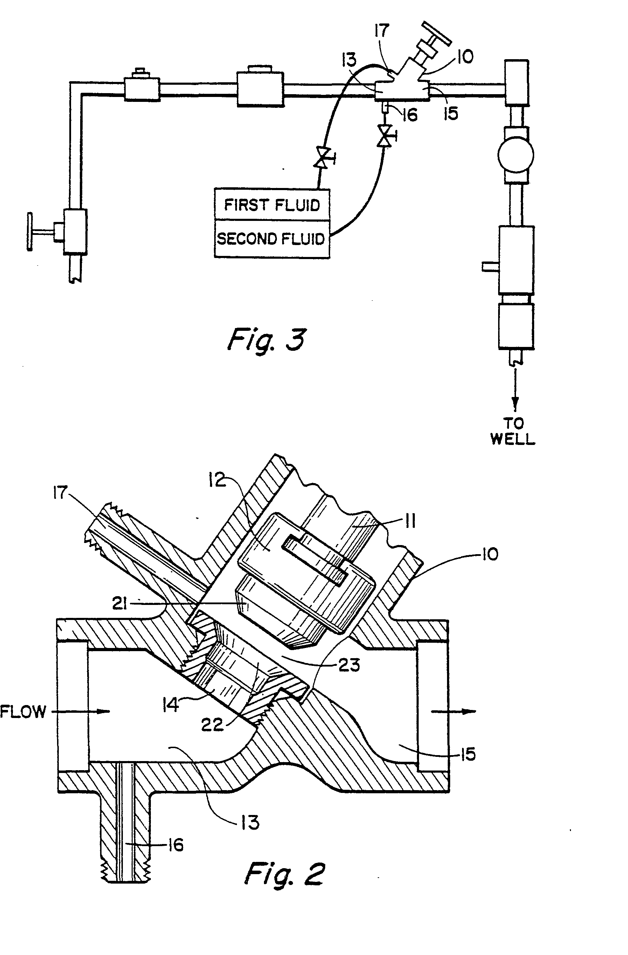

The apparatus basically comprises a valve body having a first inlet conduit and an outlet conduit which form a portion of the body, a control means, located within the body between them and adapted for controlling fluid flow between them, and a second inlet conduit which is integrally joined to the body and is in fluid communication with the first inlet conduit. In a preferred embodiment, the apparatus includes a third inlet conduit which is in fluid communication with the first inlet conduit and is integrally joined to the body, preferably at a position in the path of fluid flow (as indicated on Figs. 1 and 2) from the first inlet conduit to the outlet conduit, which position is prior to the position of the second inlet conduit.

In Fig. 1, the valve body 10 is shown with the first inlet conduit 13, the outlet conduit 15, and the second inlet conduit 17, all integrally cast as one solid piece. Also shown in Fig. 1 is a tapering of the first inlet conduit 14 to the point within the body where a control member or means 12 is adjustable from the exterior of the body by means a rotatable valve stem 11 which is joined to a male member 21 of the control means in a rotatable fashion as is evident in Figure 2. Further shown in Fig. 2 is a female member 22 of the control means and a third inlet conduit 16 which is associated with a preferred embodiment of the apparatus.

In operation, the aqueous medium is introduced through conduit 13, 16 or 17. The w/o emulsion is introduced through another of conduits 13, 16 or 17. Preferably, since the aqueous medium will desirably be the major component of the resulting aqueous stream issuing from conduit 15, it will be introduced through inlet conduit 13 which is shown larger than the other conduits to handle a greater volume.

Preferably, the w/o emulsion is introduced into the aqueous medium at a point directly adjacent to the control member 12, most preferably at a point in the flow path directly following the point at which the aqueous medium has passed through the female member 22 of the control means. In this fashion, the w/o emulsion is introduced into the aqueous medium at a point of high turbulence 23 created by the pressure drop of the fluid across the control member. Thus, inversion of the emulsion and resulting good dispersion and/or dissolution of the polymer in the aqueous phase occurs.

The polymer of the w/o emulsion is preferably a polymer comprising units resulting from polymerization of acrylamide monomer, i.e., an "acrylamide polymer". Such polymers may comprise the residue of other compatible monomer units, for example acrylic acid and its salts, acrylate esters, methacrylamide, methacrylic acid, its salts and methacrylate esters, 2-acrylamide-2-methylpropane sulfonic acid, and the like. Most preferably, the acrylamide polymer comprises both acrylamide units and units from acrylic acid or its salts which units are commonly generated by the hydrolysis of some of the acrylamide units of the polymer. Preferably, the w/o emulsion comprises an acrylamide polymer having from 1 to 75 percent, more preferably from 4 to 40 percent, by weight, of the acrylamide units hydrolized to units of acrylic acid or its salts.

In a particularly preferred embodiment, when the aqueous medium is hardwater or brine from a sub-terranean formation, it is introduced through inlet conduit 13. The w/o emulsion comprises a partially hydrolized acrylamide polymer, from 99 to 25 percent by weight, of which is non-hydrolized acrylamide units. The emulsion is represented in Fig. 3 by "First Fluid" and is introduced through second inlet conduit 17. The "Second Fluid" of Fig. 3 is an aqueous solution comprising a water soluble surfactant, preferably a nonionic or anionic surfactant, and most preferably a nonionic surfactant solution, which is introduced through second inlet conduit 16. The resulting inverted, well dispersed aqueous stream of polymer is conducted from outlet conduit 15 to the point of use such as a wellbore penetrating a subterranean formation.

In Figures 1 and 2, inlet conduits 17 and 16 are shown as being cast as part of the valve body. It is also possible to tap the body and weld a conduit of suitable diameter to the body at the point of abutment. Use of a conduit threaded into the valve body is to be avoided with hard water and brines as are encountered in oilfield operations, since the corrosive nature of such brines may, when penetrating said threads, cause corrosion to occur at the threads. Such corrosion will cause a weakening of the apparatus which may result in failure of the apparatus. However, if the threads are protected from corrosion, as by use of a fluorinated

31,246-F                    -6-

hydrocarbon layer or tape, it may be considered that the entry conduit is an integral part of the body.

Example

Run A. An apparatus as described in Fig. 1 and 2 is connected to a supply of fresh water. A w/o emulsion containing, by weight, about one third kerosene as the outside phase and about two thirds aqueous polyacrylamide solution as the inside phase (about fifty percent polymer solids), is injected through the second inlet conduit 17. Since the water is fresh, the third inlet conduit 16 is closed and not used. The emulsion is fed at a rate of about 500 ppm polymer solids, based on the amount of water in both of the streams. The valve is partially open and the fresh water is passed at a rate sufficient to create turbulent mixing of the emulsion and fresh water stream in the area 23 in the chamber surrounding the male member 21 of the control means.

Samples of the resulting 500 ppm aqueous polymer stream are withdrawn from outlet conduit 15. These samples are placed in Brookfield LV Viscometer equipped with a UL spindle and their viscosities are measured, at about 20°C, at various speeds.

Run B. In a like fashion, the apparatus is employed to invert the same emulsion into the same fresh water stream. One modification is made, however, the emulsion is injected through third inlet conduit 16 instead of second inlet conduit 17.

The samples from Run B are found uniformly to have a lower viscosity than those of Run A, demonstrating

31,246-F

the advantage of a preferred mode of introducing the emulsion at a point directly following the point where the aqueous medium passes through the female member 22, rather than introducing the emulsion to the aqueous medium at a point upstream from the control member.

The viscosities of the aqueous polymer samples from Run A and B are described in the following table. The samples are uniformly tested for viscosity after recovery.

TABLE

| Run - Sample | Spindle Speed (rpm) | Viscosity (cps) |
|---|---|---|
| A-1 | 1.5 | 7 |
| B-1 | 1.5 | 4.4 |
| A-2 | 3 | 6.5 |
| B-2 | 3 | 5.8 |
| A-3 | 6 | 5.5 |
| B-3 | 6 | 4.9 |
| A-4 | 12 | 4.9 |
| B-4 | 12 | 4.5 |

While these viscosity differences may appear small in a large polymer waterflood of an oil-bearing reservoir, millions of pounds of polymer are added over many months of continuous injection. Consequently, if a given viscosity can be attained by adding only 500 ppm polymer solids using the preferred apparatus and method of the invention, rather than by adding 600 ppm polymer to attain that viscosity using other methods, then a significant cost saving can be realized by the oilfield operator.

CLAIMS

1.   An apparatus for inverting a water-in-oil emulsion containing a water-soluble or water-dispersible polymer into an aqueous medium, which apparatus comprises:

    (A)   a valve body having a first inlet conduit and an outlet conduit which form a portion of the valve body;

    (B)   a second inlet conduit which is integrally joined to the valve body and which is in fluid communication with the first inlet conduit; and

    (C)   a control means, located within the valve body between the first inlet and outlet conduits, for controlling fluid flow between the conduits;

wherein the control means is adjustably positioned in the valve body to control fluid communication between the first inlet and outlet conduits.

2.   The apparatus of Claim 1 where the control means comprises a male and a female member, at least one member being movably mounted in the valve body.

3.   The apparatus of Claim 1 wherein the control means is located in a chamber between the first inlet and the outlet conduits, and the second inlet conduit communicates with the chamber.

4. The apparatus of Claim 3 wherein a third inlet conduit communicates with the first inlet conduit.

5. The apparatus of Claim 4 wherein the inlet and outlet conduits are cast as part of the valve body or are welded to the valve body.

6. The apparatus of Claim 2 wherein the control means is adjustable to control fluid communication from the inlet to the outlet conduits by turning a valve stem which is rotatably attached to the male member and thereby bring the male and female members into or out of intimate contact with each other, respectively.

7. A method for inverting a water-in-oil emulsion into an aqueous medium, wherein the emulsion's water phase contains a water-soluble or water-dispersible polymer; which process comprises employing the apparatus of Claim 1 and

(A) introducing the aqueous medium or the emulsion into the first inlet conduit;

(B) simultaneously introducing the other of the aqueous medium or the emulsion into the second inlet conduit;

(C) conducting the fluids of steps (A) and (B) to the outlet conduit and there collecting a resulting aqueous, polymer and oil containing stream; and

0119665

(D)   conducting the resulting stream
from the valve body.

8.   The method of Claim 7 wherein the aqueous
medium is introduced into the first inlet conduit and
the emulsion is introduced into the second inlet conduit.

9.   The method of Claim 7 or 8 wherein the
valve body includes a third inlet conduit which communicates
with the first inlet conduit, and introducing an inverting
fluid through the third inlet conduit into the aqueous
medium.

FLOW

Fig. 1

*Fig. 3*

FIRST FLUID

SECOND FLUID

TO WELL

FLOW

*Fig. 2*